# EUROPEAN PATENT APPLICATION

(11) **EP 4 746 087 A1**
(43) Date of publication of application: **20.05.2026**
(21) Application number: 23945736.9
(22) Date of filing: 27.12.2023
(51) Int. Cl.: H01M 10/04

(54) **CAP ASSEMBLY, CAP ASSEMBLY ASSEMBLING METHOD, AND BATTERY**

(30) Priority: 14.07.2023 CN 202310872207
(71) Applicant: Guangdong Mic-power New Energy Co., Ltd., Guangdong 516055 (CN)
(72) Inventor: XU, Jiangtao, Guangdong 516055 (CN); CHEN, Zhiyong, Guangdong 516055 (CN)
(74) Representative: Rau, Schneck & Hübner Patentanwälte Rechtsanwälte PartGmbB
(86) International application number: PCT/CN2023/142249
(87) International publication number: WO 2025/015858

(57) **Abstract**

Embodiments of the present application provide a cap assembly, an assembly method therefor, and a battery. The method for assembling the cap assembly includes: providing a cover plate (1) and a cap (3), and forming a passivation protective film on the surface of the cover plate (1) and the surface of the cap (3); applying a heat-curable adhesive (2) on the surface of the cover plate (1) having the passivation protective film and/or on the surface of the cap (3) having the passivation protective film, and performing a first heating treatment on the heat-curable adhesive (2) to cause surface drying; aligning the cover plate (1) and the cap (3) and performing a first pressing to form a preliminary assembly; wherein a temperature during the first pressing is greater than a temperature during the first heating treatment; performing a second pressing on the preliminary assembly to form the cap assembly, wherein a temperature during the second pressing is greater than the temperature during the first pressing, and a pressure during the second pressing is greater than a pressure during the first pressing.

## Description

### CROSS-REFERENCE TO RELATED APPLICATIONS

This application claims priority to the Chinese patent application No. 202310872207.7 filed with the China National Intellectual Property Administration (CNIPA) on July 14, 2023, entitled "Cap Assembly, Assembly Method therefor, and Battery", which is incorporated herein by reference in its entirety.

### TECHNICAL FIELD

Embodiments of the present application relate to the technical field of energy storage devices, and more particularly, embodiments of the present application relate to a cap assembly, an assembly method therefor, and a battery.

### BACKGROUND

A lithium-ion battery is a rechargeable battery, which primarily operates by relying on the movement of lithium ions between a positive electrode and a negative electrode. Due to characteristics such as small size, light weight, strong power capacity, and environmental friendliness, lithium-ion batteries have been widely used in industrial production and daily life. A cap assembly is one of the important components of a lithium-ion battery.

Existing cap assemblies have low corrosion resistance and poor connection strength, which cannot meet user requirements and limit their development and widespread adoption.

### SUMMARY

An object of the present application is to provide a new technical solution for a cap assembly, an assembly method therefor, and a battery.

In a first aspect, the present application provides a method for assembling a cap assembly. The method for assembling the cap assembly includes:
providing a cover plate and a cap, and forming a passivation protective film on the surface of the cover plate and the surface of the cap;
applying a heat-curable adhesive on the surface of the cover plate having the passivation protective film and/or on the surface of the cap having the passivation protective film, and performing a first heating treatment on the heat-curable adhesive;
aligning the cover plate and the cap and performing a first pressing to form a preliminary assembly; wherein a temperature during the first pressing is greater than a temperature during the first heating treatment; and
performing a second pressing on the preliminary assembly to form the cap assembly, wherein a temperature during the second pressing is greater than the temperature during the first pressing, and a pressure during the second pressing is greater than a pressure during the first pressing.

In some embodiments, the method for forming the passivation protective film on the surface of the cover plate and the surface of the cap includes:
performing an acid pickling passivation treatment on the cover plate to form the passivation protective film on the surface of the cover plate; and
performing an acid pickling passivation treatment on the cap to form the passivation protective film on the surface of the cap.

In some embodiments, when performing the first heating treatment on the heat-curable adhesive, the first heating temperature is 45°C to 100°C.

In some embodiments, an application thickness of the heat-curable adhesive is 1 µm to 50 µm.

In some embodiments, a pressing temperature of the first pressing is 80°C to 150°C, and a pressing pressure of the first pressing is 0.1 MPa to 0.5 MPa.

In some embodiments, a pressing temperature for performing the second pressing on the preliminary assembly is 120°C to 200°C, and a pressing pressure is 1 MPa to 5 MPa.

In some embodiments, in a thickness direction of the cap assembly, a maximum thickness in the cap assembly is less than 0.5 mm.

In some embodiments, the heat-curable adhesive is applied on the surface of the cover plate having the passivation protective film and/or on the surface of the cap having the passivation protective film, wherein an application area of the heat-curable adhesive is a first area; and
the cover plate and the cap are aligned together, forming an overlapping area, wherein the first area is greater than the overlapping area.

In a second aspect, the present application provides a cap assembly. The cap assembly is assembled using the method for assembling a cap assembly according to the first aspect described above.

In a third aspect, the present application provides a battery. The battery includes a battery case and a cap assembly, wherein the cap assembly is assembled using the method for assembling a cap assembly according to the first aspect described above; and the battery case is connected to the cover plate in the cap assembly.

According to the embodiments of the present application, a method for assembling a cap assembly is provided, wherein passivation protective films are formed on both the surface of the cover plate and the surface of the cap, improving the corrosion resistance of the cover plate and the cap; meanwhile, a heat-curable adhesive is applied on the surface of the cover plate and/or the surface of the cap, and after the cover plate and the cap are assembled together, two pressing treatments are performed, causing the cover plate and the cap to adhere firmly, thereby improving the connection strength of the cap assembly.

Other features and advantages of the present disclosure will become apparent through the following detailed description of exemplary embodiments thereof with reference to the accompanying drawings.

### BRIEF DESCRIPTION OF THE DRAWINGS

The drawings incorporated in and forming a part of the specification illustrate embodiments of the present disclosure and, together with the description, serve to explain the principles of the disclosure.
FIG. 1 is a schematic structural diagram of a cap assembly.
FIG. 2 is a schematic structural diagram of a battery.
FIG. 3 is a flowchart of a method for assembling a cap assembly.

### Description of Reference Numerals:

1: cover plate; 2: heat-curable adhesive; 3: cap; 31: bottom portion; 32: protrusion.

### DETAILED DESCRIPTION

Various exemplary embodiments of the present application will now be described in detail with reference to the accompanying drawings. It should be noted that unless specifically stated otherwise, the relative arrangement, numerical expressions, and numerical values of components and steps set forth in these embodiments do not limit the scope of the present application.

The following description of at least one exemplary embodiment is merely illustrative in nature and is in no way intended to limit the present application and its application or use.

Technologies and apparatuses known to those of ordinary skill in the relevant fields may not be discussed in detail, but where appropriate, such technologies and apparatuses should be considered as part of the specification.

In all examples shown and discussed herein, any specific values should be interpreted as merely exemplary and not as limiting. Therefore, other instances of the exemplary embodiments may have different values.

It should be noted that similar reference numerals and letters denote similar items in the following drawings, and therefore, once an item is defined in one drawing, it need not be further discussed in subsequent drawings.

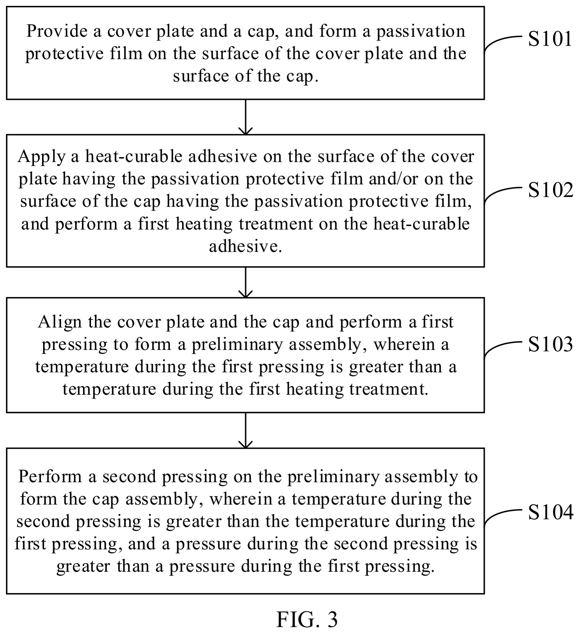

An embodiment of the present application provides a method for assembling a cap assembly. Referring to FIG. 3, the method for assembling the cap assembly includes:
S101: providing a cover plate 1 and a cap 3, and forming a passivation protective film on the surface of the cover plate 1 and the surface of the cap 3;
S102: applying a heat-curable adhesive 2 on the surface of the cover plate 1 having the passivation protective film and/or on the surface of the cap 3 having the passivation protective film, and performing a first heating treatment on the heat-curable adhesive 2;
S103: aligning the cover plate 1 and the cap 3 and performing a first pressing to form a preliminary assembly, wherein a temperature during the first pressing is greater than a temperature during the first heating treatment; and
S104: performing a second pressing on the preliminary assembly to form the cap assembly, wherein a temperature during the second pressing is greater than the temperature during the first pressing, and a pressure during the second pressing is greater than a pressure during the first pressing.

In step S101, a metal cover plate and a metal cap are provided, and a passivation protective film is formed on both the metal cover plate and the metal cap.

Specifically, the passivation protective film is formed on the surface of the metal cover plate. For example, the metal cover plate may be a stainless steel cover plate. A passivation protective film is formed on the surface of the cover plate 1 to increase the corrosion resistance of the cover plate surface (by isolating the cover plate from corrosive media through the passivation protective film). For example, the passivation protective film is formed on every surface of the cover plate 1.

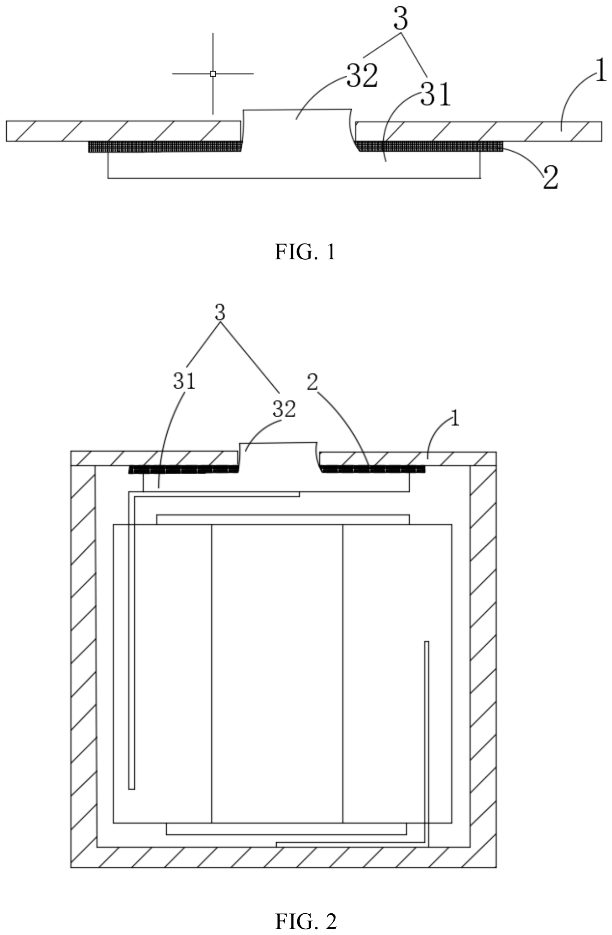

The passivation protective film is formed on the surface of the metal cap. For example, the metal cap may be an aluminum cap. A passivation protective film is formed on the surface of the cap 3 to increase the corrosion resistance of the cap 3 surface (by isolating the cap from corrosive media through the passivation protective film). For example, the passivation protective film is formed on every surface of the metal cap. In a specific embodiment, referring to FIG. 1 and FIG. 2, the cap includes a bottom portion 31 and a protrusion 32 formed on and protruding from the bottom portion 31, and the passivation protective film is formed on both the bottom portion 31 and the protrusion 32.

In step S102, in one example, the heat-curable adhesive 2 is applied on the surface of the cover plate 1 having the passivation protective film, and a first heating treatment is performed on the heat-curable adhesive 2.

In another example, the heat-curable adhesive 2 is applied on the surface of the cap 3 having the passivation protective film, and a first heating treatment is performed on the heat-curable adhesive 2.

In yet another example, the heat-curable adhesive 2 is applied on the surface of the cover plate 1 having the passivation protective film, and a first heating treatment is performed on the heat-curable adhesive 2. Simultaneously, the heat-curable adhesive 2 is applied on the surface of the cap 3 having the passivation protective film, and a first heating treatment is performed on the heat-curable adhesive 2.

Preferably, the heat-curable adhesive 2 is applied on the surface of the cover plate 1 having the passivation protective film, and a first heating treatment is performed on the heat-curable adhesive 2, and in this case, the heat-curable adhesive 2 may not be applied on the surface of the cap having the passivation protective film.

In this step, the heat-curable adhesive 2 is applied on the surface of the cover plate having the passivation protective film and/or on the surface of the cap having the passivation protective film, and after the first heating, the adhesive cures to form an insoluble, infusible solid adhesive layer.

Specifically, before the cover plate 1 is assembled with the cap 3, a first heating treatment may be performed on the heat-curable adhesive 2 on the surface of the cover plate 1, causing the heat-curable adhesive 2 to pre-cure on the surface of the cover plate 1, so as to achieve a non-sticky state for easy storage, handling, and transportation of the cover plate 1.

Before the cover plate 1 is assembled with the cap 3, a first heating treatment may be performed on the heat-curable adhesive 2 on the surface of the cap 3, causing the heat-curable adhesive 2 to pre-cure on the surface of the cap 3, so as to achieve a non-sticky state for easy storage, handling, and transportation of the cap 3.

In step S103, the cover plate 1 and the cap 3 are aligned and undergo a first pressing (pre-pressing), placing the cover plate 1 and the cap 3 in a pre-bonded, non-separated state. The assembly of the cover plate 1 and the cap 3 after the first pressing is defined as a preliminary assembly. During the first pressing of the cover plate 1 and the cap 3, a second heating treatment is performed on the heat-curable adhesive 2.

Specifically, the heat-curable adhesive 2 is applied on the surface of the cover plate 1, and after the heat-curable adhesive 2 undergoes a heating treatment, the heat-curable adhesive 2 cures. During the first pressing of the cover plate 1 and the cap 3, the cured heat-curable adhesive 2 provides insulation and sealing between the cover plate and the cap.

Alternatively, the heat-curable adhesive 2 is applied on the surface of the cap 3. During the first pressing of the cover plate 1 and the cap 3, the cured heat-curable adhesive 2 provides insulation and sealing for the cover plate 1 and the cap 3.

Alternatively, the heat-curable adhesive 2 is applied on the surface of the cap 3, and the heat-curable adhesive 2 is applied on the surface of the cover plate 1. The heat-curable adhesive 2 on the cap 3 and the heat-curable adhesive 2 on the cover plate 1 provide insulation and sealing for the cover plate 1 and the cap 3.

During the preliminary pressing, the cap 3 and the cover plate 1 undergo pre-pressing, causing the heat-curable adhesive 2 to achieve a further surface drying effect. The heat-curable adhesive 2 places the cap 3 and the cover plate 1 in a pre-bonded state and provides insulation and sealing for the cap 3 and the cover plate 1.

In this step, the temperature during the heating treatment performed on the heat-curable adhesive 2 is greater than the temperature during the first heating treatment performed on the heat-curable adhesive 2 in step S102. Therefore, in step S102, when the first heating treatment is performed on the heat-curable adhesive 2, it only serves to cure the heat-curable adhesive 2, without imparting adhesive properties thereto, and results in a dry surface; in step S103, when the heating treatment is performed on the heat-curable adhesive 2, heating can cause further surface drying of the heat-curable adhesive 2, and the heat-curable adhesive 2 can place the cover plate 1 and the cap 3 in a pre-bonded state.

In step S104, the preliminary assembly undergoes a second pressing treatment. During the second pressing, both the temperature and the pressure during the second pressing are greater than the temperature and pressure during the first pressing, causing the cover plate 1 and the cap 3 to adhere firmly. During the second pressing of the preliminary assembly, a third heating treatment is performed on the heat-curable adhesive 2.

Therefore, in the embodiment of the present application, passivation protective films are formed on both the surface of the cover plate 1 and the surface of the cap 3, improving the corrosion resistance of the cover plate 1 and the cap 3. The heat-curable adhesive 2 is applied on the surface of the cover plate 1 and/or the surface of the cap 3, and the cover plate 1 and the cap 3 are assembled together. After undergoing two pressing treatments, the cover plate 1 and the cap 3 adhere firmly, improving the connection strength of the cap assembly; when the cap assembly is applied in a battery, thus reducing the risk of electrolyte leakage.

In one embodiment, the method for forming the passivation protective film on the surface of the cover plate 1 and the surface of the cap 3 includes:

performing an acid pickling passivation treatment on the cover plate 1 to form the passivation protective film on the surface of the cover plate 1;

and performing an acid pickling passivation treatment on the cap 3 to form the passivation protective film on the surface of the cap 3.

In this embodiment, the passivation protective film is formed on the surface of the cover plate 1 through an acid pickling passivation process. For example, the immersion method, the paste method, or the spray method is used to perform acid pickling passivation on the cover plate.

This embodiment is described using the immersion method for performing acid pickling passivation on the cover plate: the acid pickling passivation process flow includes: degreasing → first water rinsing → acid pickling passivation → second water rinsing → neutralization → third water rinsing → pure water rinsing → drying.
1. Before processing, a degreasing treatment is performed on the surface of the cover plate to remove oil stains and rust stains on the surface of the cover plate.
2. The first water rinsing is to clean off the degreasing agent, for example, ordinary tap water is used to rinse the surface of the cover plate for 1 minute to 3 minutes.
3. Acid pickling passivation involves immersing the cover plate in an acid pickling passivation solution, with an immersion time of 5 minutes to 10 minutes.
4. The second water rinsing is to rinse off the acid pickling passivation solution remaining on the surface of the cover plate, for example, flowing ordinary tap water is used to rinse for 1 minute to 3 minutes.
5. Neutralization is performed because the acid pickling passivation solution is acidic and is difficult to completely clean with water only; 5% sodium carbonate or sodium hydroxide can be used to neutralize the acid pickling passivation solution, with a neutralization time of 5 minutes to 10 minutes.
6. The third water rinsing is to rinse off the passivation solution remaining on the surface of the cover plate, for example, flowing ordinary tap water is used to rinse for 1 minute to 3 minutes.
7. The purpose of the pure water rinsing is that ordinary tap water contains impurities, and using purified water can remove impurities and water marks; for example, purified water is used to rinse the surface of the cover plate for 1 minute to 3 minutes.
8. The drying operation is: drying in an oven at below 180°C or air-drying, to form the passivation protective film on the surface of the cover plate, thereby forming a first cover plate 1.

In this embodiment, the passivation protective film is formed on the surface of the cap through the acid pickling passivation process. For example, the immersion method, the paste method, or the spray method is used to perform acid pickling passivation on the cap.

This embodiment is described using the immersion method for performing acid pickling passivation on the cap: the acid pickling passivation process flow includes: degreasing → first water rinsing → acid pickling passivation → second water rinsing → neutralization → third water rinsing → pure water rinsing → drying.
1. Before processing, a degreasing treatment is performed on the surface of the cap to remove oil stains and rust stains on the surface of the cap.
2. The first water rinsing is to clean off the degreasing agent, for example, ordinary tap water is used to rinse the surface of the cap for 1 minute to 3 minutes.
3. Acid pickling passivation involves immersing the cap in an acid pickling passivation solution, with an immersion time of 5 minutes to 10 minutes.
4. The second water rinsing is to rinse off the acid pickling passivation solution remaining on the surface of the cap, for example, flowing ordinary tap water is used to rinse for 1 minute to 3 minutes.
5. Neutralization is performed because the acid pickling passivation solution is acidic and is difficult to completely clean with water only; 5% sodium carbonate or sodium hydroxide can be used to neutralize the acid pickling passivation solution, with a neutralization time of 5 minutes to 10 minutes.
6. The third water rinsing is to rinse off the passivation solution remaining on the surface of the cap, for example, flowing ordinary tap water is used to rinse for 1 minute to 3 minutes.
7. The purpose of the pure water rinsing is that ordinary tap water contains impurities, and using purified water can remove impurities and water marks; for example, purified water is used to rinse the surface of the cap for 1 minute to 3 minutes.
8. The drying operation is: drying in an oven at below 180°C or air-drying, to form the passivation protective film on the surface of the cap, thereby forming a first cap 3.

In one embodiment, when performing the first heating treatment on the heat-curable adhesive 2, the first heating temperature is 45°C to 100°C.

In this embodiment, the heat-curable adhesive 2 is uniformly applied on the surface of the cover plate 1 and/or the cap 3 through a coating process or a spraying process. A heating method is used to bring the heat-curable adhesive 2 to a surface-dried state, wherein the first heating temperature is 45°C to 100°C. Limiting the first heating temperature within this range causes the heat-curable adhesive 2 to pre-cure on the surfaces of the cover plate 1 and the cap 3, so as to achieve a non-tacky state, prevent adhesion between the cover plate and the cap, and facilitate storage, handling, and transportation.

The heat-curable adhesive 2 is defined as follows: the water absorption of the heat-curable adhesive 2 is less than 0.1%, the insulation resistance is greater than 10⁹ Ω, and the dielectric breakdown voltage is greater than 50 kV/mm (50 kV is the withstand breakdown voltage). That is, the heat-curable adhesive 2 has low water absorption, high insulation performance, and high dielectric breakdown voltage.

The purpose of defining the heat-curable adhesive 2 as such is: the low water absorption aims to minimize the chemical reaction between moisture in the air and the electrolyte, therefore the lower the water absorption of the heat-curable adhesive 2, the better. The withstand breakdown voltage of the heat-curable adhesive 2 is greater than 50 kV to prevent the adhesive from being broken down and causing the cover plate 1 and the cap 3 to be directly connected together.

Specifically, the heat-curable adhesive 2 may be phenolic resin, urea-formaldehyde resin, melamine resin, epoxy resin, polyurethane, unsaturated polyester, heterocyclic polymer, or the like.

In one embodiment, the application thickness of the heat-curable adhesive 2 is: 1 µm to 50 µm.

In this embodiment, the thickness of the heat-curable adhesive 2 applied on the surface of the cover plate 1 or on the surface of the cap 3 is limited. The application thickness is 1 µm to 50 µm, to avoid the application thickness being too thick, which would affect the overall thickness of the cap assembly, and to avoid the application thickness being too thin, which would affect the connection strength between the cover plate 1 and the cap 3.

In one embodiment, performing the first pressing of the cover plate 1 and the cap 3 specifically includes: the cover plate 1 is provided with a through-hole, a portion of the cap passes through the through-hole to assemble the cover plate 1 and the cap 3 together, and the assembled cover plate 1 and cap 3 undergo the first pressing.

In one embodiment, a pressing temperature of the first pressing is 80°C to 150°C, and a pressing pressure of the first pressing is 0.1 MPa to 0.5 MPa.

In one embodiment, a pressing temperature for performing the second pressing on the preliminary assembly is: 120°C to 200°C, and a pressing pressure is 1 MPa to 5 MPa.

In the above embodiments, the pressing temperature and pressing pressure during the first pressing are limited, and the pressing temperature and pressing pressure during the second pressing are limited, to ensure that the cover plate 1 and the cap 3 adhere firmly.

Specifically, the pressing temperature of the first pressing is less than the pressing temperature of the second pressing, and the pressing pressure of the first pressing is less than the pressing pressure of the second pressing, so that after the first pressing, the cover plate 1 and the cap 3 are pre-bonded together, meaning the bond between the cover plate 1 and the cap 3 is not very strong; for example, if it is found that the cover plate 1 and the cap 3 are not fully aligned (incomplete alignment can be understood as: when the cover plate 1 and the cap 3 contact, there is no heat-curable adhesive 2 at the contact position), the alignment relationship between the cover plate 1 and the cap 3 can still be adjusted in time to achieve full alignment between the cover plate 1 and the cap 3.

Specifically, the pressing temperature of the second pressing is greater than the pressing temperature of the first pressing, and the pressing pressure of the second pressing is greater than the pressing pressure of the first pressing, so that after the second pressing, the purposes of ensuring the bonding effect between the cover plate 1 and the cap 3 and controlling the thickness of the cap assembly are achieved. Specifically, the pressing temperature during the second pressing is 120°C to 200°C, and the pressing pressure is 1 MPa to 5 MPa, causing the cover plate 1 and the cap 3 to adhere firmly while keeping the thickness of the cap assembly within a reasonable range.

For example, when performing the second pressing on the preliminary assembly, the height of the preliminary assembly is limited during the pressing and lowering process through a pressing fixture, to achieve the purposes of ensuring the bonding effect and controlling the thickness of the cap assembly. Limiting the height of the preliminary assembly during the pressing and lowering process is well-known to those skilled in the art, for example, by setting a standard size model on the pressing fixture and comparing it in real time with the standard size model during the pressing process to control the thickness of the cap assembly.

In an optional embodiment, when performing the second pressing on the preliminary assembly, the second pressing time is 1.5 hours to 2 hours. The second pressing time is limited to ensure the bonding effect between the cover plate 1 and the cap 3 and control the thickness of the cap assembly.

In one embodiment, in the thickness direction of the cap assembly, the maximum thickness in the cap assembly is less than 0.5 mm.

In this embodiment, the thickness of the finally assembled cap assembly is limited, wherein the maximum thickness in the cap assembly is less than 0.5 mm, making the overall thickness of the cap assembly relatively thin. When the cap assembly is applied in a battery, the cap assembly does not affect the overall height of the battery.

In an optional embodiment, a thickness range of the cover plate 1 in the cap assembly is 0.15 mm to 0.2 mm. Without affecting the structural strength of the cover plate 1, the thickness of the cover plate 1 is pressed to be relatively thin, preventing the cap assembly from becoming too thick.

A thickness range of the bottom portion 31 of the cap 3 in the cap assembly is 0.15 mm to 0.2 mm. Without affecting the structural strength of the cap 3, the thickness of the cap 3 is pressed to be relatively thin, preventing the cap assembly from becoming too thick.

In one embodiment, the heat-curable adhesive 2 is applied on the surface of the cover plate having the passivation protective film and/or on the surface of the cap having the passivation protective film, wherein an application area of the heat-curable adhesive 2 is a first area;
the cover plate and the cap are pressed together, forming an overlapping area, wherein the first area is greater than the overlapping area.

Specifically, the cover plate 1 and the cap 3 are pressed together, forming an overlapping area, which is the contact area between the two during pressing. The application area of the heat-curable adhesive 2 is greater than the contact area between the cap and the cover plate, enabling the heat-curable adhesive 2 to provide insulation between the cap and the cover plate and preventing direct contact between the cover plate and the cap.

In an optional embodiment, the method for assembling the cap assembly further includes performing an insulation withstand voltage test on the cap assembly to ensure consistency of its withstand voltage performance. The method for performing the insulation withstand voltage test on the cap assembly is well-known to those skilled in the art, for example, by using an insulation withstand voltage tester to test the cap assembly, and specific testing methods are not elaborated herein.

In an optional embodiment, the method for assembling the cap assembly further includes performing a thickness test on the cap assembly to ensure consistency of its thickness. The method for performing the thickness test on the cap assembly is well-known to those skilled in the art, for example, by using a laser thickness gauge to test the cap assembly, and specific testing methods will not be elaborated herein.

In a second aspect, an embodiment of the present application further provides a cap assembly. The cap assembly is assembled using the above-described method for assembling a cap assembly.

In this embodiment, a cap assembly is provided. The cap assembly assembled using the above-described method for assembling a cap assembly has good corrosion resistance and high connection strength.

In a third aspect, an embodiment of the present application further provides a battery. The battery includes a battery case and a cap assembly, wherein the cap assembly is assembled using the above-described method for assembling a cap assembly;
the battery case is connected to the cover plate 1 in the cap assembly.

In this embodiment, a battery is provided. The battery includes a battery case and a cap assembly. The cap assembly assembled using the above-described method for assembling a cap assembly is applied in the battery, avoiding leakage of the internal electrolyte of the battery. For example, the battery is a fully sealed battery. Specifically, the battery may be a button cell.

The foregoing embodiments have focused on describing the differences between the various embodiments. Different optimized features among the various embodiments can be combined to form more preferred embodiments as long as they are not contradictory. For the sake of conciseness, further details are omitted here.

Although specific embodiments of the present application have been described in detail by way of example, those skilled in the art should understand that the above examples are for illustrative purposes only and are not intended to limit the scope of the present application. Those skilled in the art should understand that modifications can be made to the above embodiments without departing from the scope and spirit of the present application. The scope of the present application is defined by the appended claims.

## Claims

1. A method for assembling a cap assembly, **characterized in that** the method comprises
providing a cover plate and a cap, and forming a passivation protective film on the surface of the cover plate and the surface of the cap;
applying a heat-curable adhesive on the surface of the cover plate having the passivation protective film and/or on the surface of the cap having the passivation protective film, and performing a first heating treatment on the heat-curable adhesive;
aligning the cover plate and the cap and performing a first pressing to form a preliminary assembly, wherein a temperature during the first pressing is greater than a temperature during the first heating treatment; and
performing a second pressing on the preliminary assembly to form the cap assembly, wherein a temperature during the second pressing is greater than the temperature during the first pressing, and a pressure during the second pressing is greater than a pressure during the first pressing.

2. The method for assembling a cap assembly according to claim 1, **characterized in that**, the method for forming the passivation protective film on the surface of the cover plate and the surface of the cap comprises:
performing an acid pickling passivation treatment on the cover plate to form the passivation protective film on the surface of the cover plate; and
performing an acid pickling passivation treatment on the cap to form the passivation protective film on the surface of the cap.

3. The method for assembling a cap assembly according to claim 1 or 2, **characterized in that**, when performing the first heating treatment on the heat-curable adhesive, the first heating temperature is 45°C to 100°C.

4. The method for assembling a cap assembly according to any one of claims 1 to 3, **characterized in that**, an application thickness of the heat-curable adhesive is 1 µm to 50 µm.

5. The method for assembling a cap assembly according to any one of claims 1 to 4, **characterized in that**, a pressing temperature of the first pressing is 80°C to 150°C, and a pressing pressure of the first pressing is 0.1 MPa to 0.5 MPa.

6. The method for assembling a cap assembly according to any one of claims 1 to 5, **characterized in that**, a pressing temperature for performing the second pressing on the preliminary assembly is 120°C to 200°C, and a pressing pressure is 1 MPa to 5 MPa.

7. The method for assembling a cap assembly according to any one of claims 1 to 6, **characterized in that**, in a thickness direction of the cap assembly, a maximum thickness in the cap assembly is less than 0.5 mm.

8. The method for assembling a cap assembly according to any one of claims 1 to 7, **characterized in that**
the heat-curable adhesive is applied on the surface of the cover plate having the passivation protective film and/or on the surface of the cap having the passivation protective film, wherein an application area of the heat-curable adhesive is a first area; and
the cover plate and the cap are aligned together to form an overlapping area, wherein the first area is greater than the overlapping area.

9. A cap assembly, **characterized in that** the cap assembly is assembled using the method for assembling a cap assembly according to any one of claims 1 to 8.

10. A battery, **characterized in that** the battery comprises a battery case and the cap assembly according to claim 9, wherein the battery case is connected to the cover plate in the cap assembly.
